# EUROPÄISCHE PATENTSCHRIFT

(11) **EP 1 010 575 B1**
(45) Veröffentlichungstag und Bekanntmachung des Hinweises auf die Patenterteilung: **03.12.2003**
(21) Anmeldenummer: 98123980.9
(22) Anmeldetag: 17.12.1998
(51) Int. Cl.: B60P 1/44

(54) **Ladebordwandsystem mit wenigstens einem Hubaktuator**
Loading tailgate system with at least one lifting actuator
Système de hayon élévateur avec au moins un actionneur pour levage

(43) Veröffentlichungstag der Anmeldung: 21.06.2000
(73) Patentinhaber: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(56) Entgegenhaltungen:
- EP-A- 0 808 747
- CH-A- 672 616
- DE-U- 6 809 482
- NL-A- 7 116 269
- PATENT ABSTRACTS OF JAPAN vol. 005, no. 112 (M-079), 21. Juli 1981 & JP 56 053932 A (KYOKUTO KAIHATSU KOGYO CO LTD), 13. Mai 1981

## Beschreibung

Die Erfindung betrifft ein Ladebordwandsystem zur Befestigung an Fahrzeugen, insbesondere Lastkraftfahrzeugen, umfassend jeweils ein im wesentlichen parallelogrammförmiges, aus zwei im wesentlichen parallel voneinander beabstandeten Tragwerken bestehendes Hub- und/oder Klapptragwerk, eine im wesentlichen plattenförmige Ladebordwand zum Heben und Absenken einer Last und ggf. zum Verschließen eines Stauraumes des Fahrzeuges und eine Hubaktuatoreinrichtung zum Heben und Senken der Ladebordwand sowie ggf. eine Klappaktuatoreinrichtung zum Verschwenken der Ladebordwand von der Horizontalen in die Vertikale und umgekehrt, wobei ein Elektromotor vorgesehen ist, der die Hubaktion der Ladebordwand bewirkt.

Aus der CH-A-672 616 ist ein Ladebordwandsystem der vorgenannten Art bekannt, bei dem eine gegenseitige Verschwenkung quer zu einem Träger auskragende Tragarme hydraulisch, pneumatisch, elektromotorisch und/oder mechanisch gegenseitig verschwenkt werden sollen. Darüber, wie und wozu in dem bekannten Dokument etwas elektromotorisch bewirkt werden soll, ist nichts ausgeführt.

Des weiteren ist ein anderes Ladebordwandsystem dieser Art bekannt (EP-A-0 808 747). Ladebordwände dieser und ähnlicher Art finden insbesondere Anwendung bei Lastkraftfahrzeugen, um mit dem Lastkraftfahrzeug zu transportierende Lasten am Einsatzort von der Ladeplattform des Lastkraftfahrzeuges auf die Fahrbahn, auf dem das Lastkraftfahrzeug steht, absenken zu können, so daß die Last dann anderweitig zum Bestimmungsort verbracht werden kann. Das gleiche gilt für den Beladungsvorgang eines Lastkraftfahrzeuges, d.h. die Last wird auf die sich auf der Fahrbahnebene befindliche Ladebordwand aufgebracht, die Ladebordwand wird auf die Höhe der Ladeplattform des Lastkraftfahrzeuges angehoben und nachfolgend auf die Ladeplattform verbracht. Ist der Ent- bzw. Beladevorgang beendet, wird bei einigen Ladebordwandsystemen die Ladebordwand aus der Horizontalen, in der sie sich zum Be- und Entladen befand, in die Vertikale verschwenkt, so daß die Ladebordwand als rückwärtiger Abschluß der Ladefläche bzw. eines kofferartig ausgestalteten Laderaumes dienen kann, bei anderen Ladebordwandsystemen wird die Ladebordwand gefaltet bzw. zusammengeklappt und an geeigneter Stelle unter die Ladefläche des Lastkraftfahrzeuges verbracht bzw. verschwenkt.

Für das Heben und Senken der Ladebordwand in im wesentlichen horizontale Ausrichtung für den Be- und Entladevorgang von der Ebene der Ladefläche eines Lastkraftfahrzeuges auf die Fahrbahn und von der Fahrbahn auf die Ebene der Ladefläche wird eine sogenannte Hubaktuatoreinrichtung verwendet, die hydraulisch, pneumatisch, elektrisch oder aus Kombinationen derartiger Mittel betrieben wird. Für das Verschwenken der Ladebordwand für das Öffnen und Schließen des eigentlichen Laderaumes aus der Horizontalen in die Vertikale und umgekehrt wird eine Klappaktuatoreinrichtung verwendet, die ebenfalls auf voraufgeführte Weise betrieben werden kann. Ladebordwandsysteme der vorbeschriebenen Art können somit zumindest eine Aktuatoreinrichtung aufweisen, die zumindest mit einem Tragwerk des parallelogrammförmigen Hub- oder Klapptragwerkes zusammenwirkt. Sind sowohl wenigstens eine Hubaktuatoreinrichtung vorhanden und wenigstens eine Klappaktuatoreinrichtung, so arbeitet die Hubaktuatoreinrichtung mit dem einen Tragwerk des parallelogrammförmigen Hub- und Klapptragwerkes zusammen, wohingegen die Klappaktuatoreinrichtung mit dem anderen Tragwerk des Hub- und Klapptragwerkes zusammenwirkt.

Die Hubaktuatoreinrichtung und, so beim Ladebordwandsy-stem überhaupt vorhanden, auch die Klappaktuatoreinrich-tung werden in bezug auf die Hub- und Absenkbewegung der Ladebordwand und, wenn eine Schwenkbewegung der Ladebordwand von der Horizontalen in die Vertikale und umgekehrt ausgeführt werden soll, d.h. wenn auch eine Klappaktuatoreinrichtung vorhanden ist, von einer an geeigneter Stelle am Fahrzeug angebrachten Bedienungseinrichtung aus gesteuert, wobei entsprechende Bedienungsbefehle durch eine Bedienungsperson mittels geeigneter Bedienungselemente an der Betätigungseinrichtung ausgeführt werden können. Regelmäßig ist für die Betätigung des bzw. der Hubaktuators bzw. Hubakturatoren und, soweit vorhanden, des Klappaktuators bzw. der Klappaktuatoren ein zentrales Hydrauliksystem vorgesehen, das mittels einer, mittels eines oder mehrerer Elektromotoren betriebenen Pumpe betrieben wird. Über geeignete Ventilmittel zwischen der Pumpe und dem Hubaktuator und ggf. dem Klappaktuator kann dann der jeweilige Aktuator betätigt werden. Umfaßt beispielsweise ein Ladebordwandsystem eine Mehrzahl von Aktuatoren, was die Regel ist, beispielsweise ein oder zwei Hubaktuatoren und ggf. ein oder zwei Klappaktuatoren, so sind alle diese Aktuatoren über ein Hydraulikleitungsnetz mit dem besagten Ventil bzw. einem Ventilblock verbunden, über das die Hydrauliksteuerung der Hubaktuatoren und ggf. der Klappaktuatoren, die in diesem Falle jeweilige Kolbenzylindersysteme sind, verbunden. Zudem ist für das Hydraulikmittel ein Tank vorgesehen, eine oder mehrere der schon erwähnten Pumpen, einer oder mehrere Elektromotoren, Relaissteuerungen und dergleichen und eine zentrale Bedienungseinheit, über die die Steuerung des Ladebordwandsystems erfolgt. Es sind also, nachdem das Ladebordwandsystem an einem Fahrzeug befestigt ist, noch viele Hydraulik- und Elektroverbindungen auszuführen, um das Ladebordwandsystem zur vollen Funktionsfähigkeit zu bringen. Dieses ist, wie leicht erkennbar, mit erheblicher manueller Tätigkeit im bezug auf Installation und Befestigung verbunden, was das Ladebordwandsystem grundsätzlich sehr kostenträchtig werden läßt. Zudem sind für die gesamten Einzelteile hohe Lagerhaltungskosten die Folge und eine kostenträchtige Verwaltung derartiger Lagerbevorratung.

Ein anderes wichtiges Problem bei Ladebordwandsystemen der bisherigen, auf voraufgeführte Weise ausgebildeten Ladebordwandsystemen besteht darin, daß aufgrund der Vielzahl der Leitungen elektrischer und hydraulischer Art sowie sonstiger Steuerungseinrichtungen der dafür benötigte Platz vielfach bei kleinen Fahrzeugen gar nicht vorhanden ist, so daß das Ladebordwandsystem eben bei diesen kleinen Fahrzeugen gar nicht benutzt werden kann, obwohl grundsätzlich dafür ein Bedürfnis besteht.

Ein weiteres Problem bei bisherigen Ladebordwandsystemen dieser Art besteht darin, das dann, wenn ein hydraulisch betriebener Aktuator beispielsweise aufgrund eines Defekts der Hydraulikleitung ausfällt, das ganze Ladebordwandsystem unbrauchbar wird, d.h. auch seine Minimalfunktionen verliert, was dazu führt, daß ein so ausgerüstetes Fahrzeug an Ort und Stelle des aufgetretenen Defekts repariert werden muß, da weder ein Anheben der Ladebordwand noch ein Klappen der Ladebordwand möglich ist, um zumindest mit dem Fahrzeug zu einer Reparaturstätte fahren zu können.

Es ist somit Aufgabe der vorliegenden Erfindung, ein Ladebordwandsystem der eingangs genannten Art zuschaffen, mit dem eine drastische Reduzierung der Einzelteile möglich ist, aus denen ein Ladebordsystem normalerweise besteht, ohne daß die Funktionsfähigkeit des Ladebordwandsystems eingeschränkt wird, mit dem ein höheres Maß an Betriebssicherheit gegenüber bekannten Ladebordwandsystmen dieser Art erreicht werden soll, mit dem eine drastische Reduzierung des Installationsaufwandes des Ladebordwandsystems an einem Fahrzeug, an dem es bestimmungsgemäß angebaut und verwendet werden soll, möglich ist, daß auch an kleinen Fahrzeugen angebracht werden kann, bei dem derartige Systeme bisher nicht angebracht werden konnten, das einfach im Aufbau und weitaus kostengünstiger als bisherige Ladebordwandsysteme herstellbar und am Fahrzeug installierbar ist und daß die Lagerhaltungskosten für derartige Ladebordwandsysteme ebenfalls drastisch reduziert werden können.

Gelöst wird die Aufgabe gemäß der Erfindung dadurch, daß die Hubaktuatoreinrichtung den dieser zugeordneten Elektromotor aufweist, wobei der Elektromotor wenigstens die Hubaktion der Hubaktuatoreinrichtung bewirkt, und der Elektromotor direkt an der Hubaktuatoreinrichtung angeordnet ist.

Mittels der erfindungsgemäßen Lösung wird vorteilhafterweise eine Dezentralisierung des Antriebs der Hubaktuatoreinrichtung erreicht, d.h. jeder Hubaktuator weist einen diesem jeweils zugeordneten Elektromotor auf, so daß lediglich eine elektrische Verbindung zu einer zentralen Steuerungseinrichtung am Fahrzeug installiert werden muß, wobei Elektroleitungen so gut vorkonfektioniert werden können, daß sie, mit entsprechenden Buchsen oder Steckern versehen nur noch am zentralen Steuergerät in entsprechende Buchsen und Stecker hineingesteckt zu werden brauchen, so daß dann sofort eine vollständige Funktionsfähigkeit gewährleistet ist. Bei der Herstellung des Ladebordwandsystems kann somit die gesamte Installation für den bestimmungsgemäßen Betrieb praktisch fertiggestellt sein, so daß das fertige Ladebordwandsystem faktisch nur noch am Fahrzeug befestigt werden muß. Ein weiterer wesentlicher Vorteil des erfindungsgemäßen Ladebordwandsystems besteht darin, daß durch die Zuordnung je eines Elektromotors zu je einer Hubaktuatoreinrichtung faktisch auch noch ein Notbetrieb aufrecht erhalten werden kann, wenn beispielsweise bei zwei vorgesehenen Hubaktuatoreinrichtungen ein Elektromotor eines Hubaktuators ausfällt. Es versteht sich zudem von selbst, daß die Lagerhaltung eines derart erfindungsgemäß vereinfachten Ladebordwandsystems drastisch reduziert werden kann ebenso wie der damit verbundene materielle Aufwand für die Verwaltung des Lagers, da keine aufwendig zu installierenden Hydrauliksysteme und dergleichen Verwendung finden.

Als vorteilhaft hat es sich herausgestellt, den Elektromotor direkt an der Hubaktuatoreinrichtung vorzusehen, so daß minimalste Übertragungswege vom Elektromotorantrieb, d.h. der Abtriebswelle des Elektromotors zur Hubund/oder Klappaktuatoreinrichtung erreicht werden, was Getriebemittel und Hydraulikelemente zum Betrieb der Hub- und/oder Klappaktuatoreinrichtung auf ein Minimum reduziert. Zudem gestattet die direkte Anbringung des Elektromotors an der Hub- und/oder Klappaktuatoreinrichtung ggf. auch bei Wartungsfällen und Störungsfällen zum Zwecke des einfachen Austausches die Demontage bzw. Montage der Hub- und/oder Klappeinrichtung zusammen mit dem dazugehörigen Elektromotor, d.h. so ist auf einfache Weise ein modularer Austausch möglich.

Gemäß einer vorteilhaften Ausgestaltung der Erfindung weist ebenfalls die Klappaktuatoreinrichtung einen dieser zugeordneten Elektromotoren auf, wobei der Elektromotor die Klappaktion der Klappaktuatoreinrichtung bewirkt. Prinzipiell gilt für die Klappaktuatoreinrichtung alles das an Vorteilen, was zuvor schon im Zusammenhang mit der Hubaktuatoreinrichtung bzw. den Hubaktuatoreinrichtungen gesagt worden ist, wobei der erfindungsgemäße Vorteil im bezug auf die Klappaktuatoreinrichtung auch für den Fall gilt, wenn bei einem Ladebordwandsystem nicht nur eine Klappaktuatoreinrichtung sondern zwei und ggf. mehrere Klappaktuatoreinrichtungen vorgesehen sind.

Bei einer vorteilhaften Ausgestaltung des Ladebordwandsystems ist der Elektromotor integral mit der Hubund/oder Klappaktuatoreinrichtung ausgebildet, d.h. in diesem Falle wirkt der Elektromotor selbst über eine Gewindespindel und/oder dergl. als unmittelbares mechanisches Betätigungsorgan der Hub- und/oder Klappaktuatoreinrichtung, d.h. in diesem Falle wird vollständig auf die Zwischenschaltung von Hydraulikmitteln verzichtet. Eine derartige Ausgestaltung ist bei entsprechender konstruktiver Auslegung gut geeignet, insbesondere bei Ladebordwandsystemen, die an kleinen Fahrzeugen angebracht werden sollen, bei denen kleinere Hublasten zu erwarten sind.

Vorteilhaft ist es auch, die Hub- und/oder Klappaktuatoreinrichtung in Form einer hydraulisch betriebenen Kolbenzylindereinrichtung auszubilden, d.h. den Elektromotor tatsächlich ausschließlich zum Betrieb einer ebenfalls der jeweiligen Kolbenzyllindereinrichtung zugeordneten jeweiligen Pumpe zu verwenden, die das Hydraulikmittel für den Hub- und Senkbetrieb bzw. den Klappbetrieb von der Horizontalen in die Vertikale und umgekehrt der Ladebordwand bewegt bzw. pumpt. Bei dieser Ausgestaltung ist faktisch der Aufbau und der Betrieb realisiert, wie er bei Ladebordwandsystemen klassischer Art anzutreffen ist, nur mit dem Unterschied, daß hier eine tatsächliche Dezentralisierung des Antriebs und der Steuerung des erfindungsgemäßen Ladebordwandsystems gegenüber den bekannten, klassischen Ladebordwandsystemen erreicht wird. Ein geringer Vorrat an Hydraulikmitteln, der sonst normalerweise in Tanks mitgeführt werden muß, kann beispielsweise durch in das System unmittelbar eingebaute Hydraulikmittel in Form von sogenannten "Pads" mitgeführt und somit immer bereitgestellt werden, wobei diese "Pads" bei Bedarf das Hydraulikmittel abgeben. Gleichwohl sind auch bei dieser dezentralisierten klassischen Ausgestaltung des Ladebordwandsystems mit Kolbenzylindereirichtungen als Aktuatoren die gleichen Vorteile gegenüber den bisherigen Ladebordwandsystemen erreichbar, wie sie oben dargestellt wurden.

Schließlich ist gemäß einer vorteilhaften weiteren Ausgestaltung des Laebordwandsystems der Elektromotor der Hub- und/oder der Klappeinrichtung zur Ausführung von deren Hub- und/oder Klappbewegung zentral steuerbar und/oder regelbar. Diese zentrale Steuerung bzw. Regelung erfolgt beispielsweise über eine Bedieneinrichtung, die mit allen Verbindungen zu den einzelnen Elektromotoren, Schaltern, Bedienungselementen auf der Ladebord-wand und sonstigen elektrischen Einrichtungen schon im Zuge der Herstellung des Ladebordwandsystems vollständig herstellbar ist, so daß ein derart ausgerüstetes Ladebordwandsystem faktisch nur noch mit dem Fahrzeug verbunden werden muß bzw. an dieses montiert werden muß und eine geeignete elektrische Leitungsverbindung zum elektrischen Bordnetz des Fahrzeuges hergestellt zu werden braucht. Ist dieses ausgeführt, ist das erfindungsgemäße Ladungsbordwandsystem sofort vollständig in bezug auf alle seine Funktionen betriebsbereit.

Die Erfindung wird nun unter Bezugnahme auf die nachfolgenden schematischen Zeichnungen anhand eines Ausführungsbeispieles eingehend beschrieben. Darin zeigen:
- Fig. 1: ein Ladebordwandsystem, wie es im Stand der Technik bekant ist, bei dem eine vollständige Installation mittels Elektroleitungen und Hydraulikleitungen zu einer Bedieneinrichtung erforderlich ist, wobei die Hydraulikleitungen, die Elektroleitungen hier aus vereinfachungsgründen weggelassen worden sind, und
- Fig. 2: ein Ladebordwandsystem gemäß der Erfindung, bei dem ein Elektromotor direkt an einer Klappaktuatoreinrichtung und ein Elektromotor direkt an einer Hubaktuatoreinrichtung angeordnet sind.

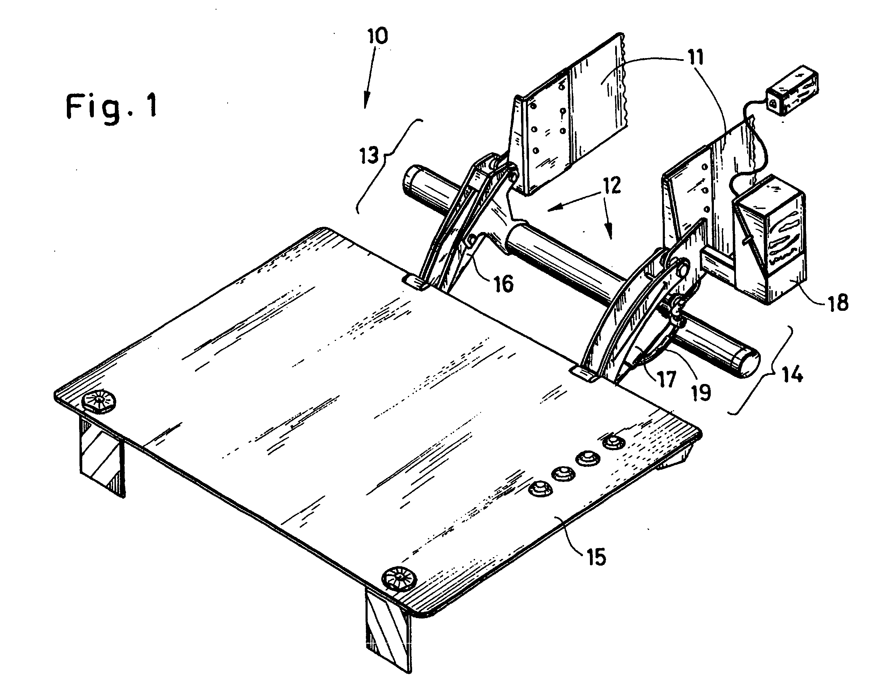

Es wird zunächst Bezug genommen auf Fig. 1, in der ein herkömmliches Ladebordwandsystem dargestellt ist. Herkömmliche Ladebordwandsysteme 10 sind allgemein bekannt, so daß hier der Aufbau und die Funktion nur kurz erklärt werden. Ein typisches Ladebordwandsystem 10 ist beispielsweise in der EP-A-0808 747 beschrieben, auf die insofern bezug genommen wird. Bei dem hier dargestellten Ladebordwandsystem 10 handelt es sich um ein solches, bei dem lediglich eine Hubaktuatoreinrichtung 16 vorgesehen ist, die ein Anheben und Absenken in vertikaler Richtung der Ladebordwand 15 bewirkt, auf dem eine hier nicht dargestellte Last beispielsweise von einer Fahrbahn und dergleichen auf eine Höhe angehoben werden soll, die der einer Ladeplattform eines Fahrzeuges 11 entspricht, um die Last auf die Ladefläche eines Fahrzeugs 11 zu verbringen. Vom Fahrzeug 11 sind hier lediglich Träger eines Chassis dargestellt, was zum Verständnis des Ladebordwandsystems 10 ausreicht. Die Klappaktuatoreinrichtung 17 bewirkt, daß die Ladebordwand 15 von der Horizontalen wie in der Fig. 1 dargestellt ist, in die Vertikale geklappt werden kann, um beispielsweise die Ladefläche eines Fahrzeuges 11 zu verschließen bzw. diese wieder freizugeben bzw. zu öffnen, um den Ent- bzw. Beladevorgang mit Lasten zu ermöglichen.

Es sei an dieser Stelle noch darauf hingewiesen, daß sogenannte Faltladebordwände, die in einen geeigneten Bereich zwischen Ladefläche und Chassis eines Fahrzeuges 11 geklappt werden können, eine Klappaktuatoreinrichtung 17 nicht benötigen, da eine Klappfunktion im vorbeschriebenen Sinne für diese Art der Ausgestaltung der Ladebordwandsysteme 10 nicht erforderlich ist. Bei dem in Figur 1 dargestellten Ladebordwandsystemen 10 sind die Hubaktuatoreinrichtung 16 und die Klappaktuatoreinrichtung 17 über Hydraulikleitungen 19, in Fig. 1 ist lediglich eine Hydraulikleitung symbolisch dargestellt, mit einem Ventil block verbunden und mit einem Hydraulikmitteltank. In das Hydrauliksystem ist eine oder es sind mehrere Pumpen integriert, die mittels eines Elektromotors bzw. mehrerer Elektromotoren, ebenfalls hier nicht dargestellt, angetrieben werden, um den nötigen Druck des Hydraulikmittels zu erzeugen. Die am Fahrzeug angebrachte Bedieneinrichtung 18 ist über elektrische Steuerleitungen mit der Hydraulikschaltung über Steuerelemente wie Relais, Schalter und dergleichen auf an sich bekannte Weise verbunden, so daß die standardmäßigen Bewegungen der Ladebordwand 15 wie Heben und Senken in der Vertikalen und ein Klappen aus der Vertikalen in die Horizontale und zurück über die entsprechend mit Hydraulikmittel beaufschlagten Hubaktuator- bzw. Klappaktuatoreinrichtungen bewirkt werden können.

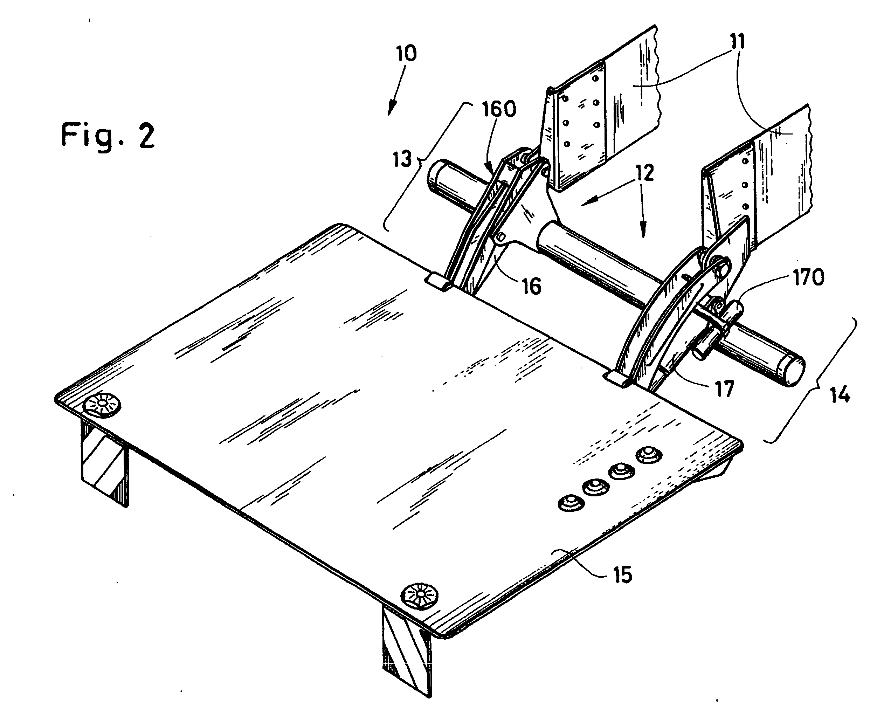

Das in Fig. 2 dargestellte erfindungsgemäße Ladungsbordwandsystem 10 unterscheidet sich gegenüber dem bekannten Ladebordwandsystem 10 gemäß Fig. 1 im wesentlichen dadurch, daß die Hubaktuatoreinrichtung 16 und die Klappaktuatoreinrichtung 17 jeweils einen diesen gesondert zugeordneten Elektromotor 160, 170 aufweisen. Die Elektromotoren 160, 170 sind bei dem in Fig. 2 dargestellten Ladebordwandsystem 10 seitlich an der Klappaktuatoreinrichtung 16 bzw. der Hubaktuatoreinrichtung 17 angeordnet. Diese Anordnung ist hier allerdings nur beispielhaft zu verstehen, um die jeweilige direkte Zuordnung der Elektromotoren 160, 170 zu der jeweiligen Hub- oder Klappaktuatoreinrichtung zuverdeutlichen.

Es ist auch möglich, daß der Elektromotor 160, 170 integral mit der Hub- und/oder Klappaktuatoreinrichtung 16, 17 ausgebildet ist, d.h. faktisch in dieser bzw. diesen anzuordnen, es ist aber auch möglich, die Hub-und die Klappaktuatoreinrichtung 16, 17 auf klassische Weise in Form einer hydraulisch betriebenen Kolben-Zylindereinrichtung auszubilden, d.h. der Elektromotor pumpt beispielsweise zur Ausführung der Hubbewegung der Hubaktuatoreinrichtung 16 auf bekannte Weise Hydraulik-mittel in diese, wohingegen der zur Klappaktuatoreinrichtung 17 gehörige Elektromotor 170 auf klassische Weise Hydraulikmittel in die Klappaktuatoreinrichtung hineinpumpt, damit die Klappaktuatoreinrichtung 17 die Schwenkbewegung der Ladebordwand 15 beispielsweise von der Vertikalen in die Horizontale ausführen kann.

Das Ladebordwandsystem 10 gemäß der Erfindung kann auf bekannte Weise an einem Fahrzeug 11 befestigt werden, siehe EP-A-0808 747. Es umfaßt, wie bekannte Ladebordwandsysteme 10 auch, jeweils ein wesentliches parallelogrammförmiges, aus zwei im wesentlichen parallel voneinander beabstandeten Tragwerken 13, 14 bestehendes Hub- und/oder Klapptragwerk 12. Daran ist auf an sich bekannte Weise die im wesentlichen plattenförmige Ladebordwand 15 befestigt, die hier als durchgehendes Element dargestellt ist. Die Ladebordwand 15 kann aber auch, wie schon voranstehend erwähnt, eine sogenannte Faltladebordwand sein.

### Bezugszeichenliste

- 10: Ladebordwandsystem
- 11: Fahrzeug
- 12: Hub- und Klapptragwerk
- 13: erstes Tragwerk
- 14: zweites Tragwerk
- 15: Ladebordwand
- 16: Hubaktuatoreinrichtung
- 160: Elektromotor
- 17: Klappaktuatoreinrichtung
- 170: Elektromotor
- 18: Bedieneinrichtung
- 19: Hydraulikleitung

## Patentansprüche

1. Ladebordwandsystem (10) zur Befestigung an Fahrzeugen (11), insbesondere Lastkraftfahrzeugen, umfassend jeweils ein im wesentlichen parallelogrammförmiges, aus zwei im wesentlichen parallel voneinander beabstandeten Tragwerken (13, 14) bestehendes Hub- und/oder Klapptragwerk (12), eine im wesentlichen plattenförmige Ladebordwand (15) zum Heben und Absenken einer Last und ggf. zum Verschließen eines Stauraumes des Fahrzeugs (12) und eine Hubaktuatoreinrichtung (16) zum Heben und Senken der Ladebordwand sowie ggf. eine Klappaktuatoreinrichtung (17) zum Verschwenken der Ladebordwand (15) von der Horizontalen in die Vertikale und umgekehrt, wobei ein Elektromotor (160) vorgesehen ist, der die Hubaktion der Ladebo rdwand (15) bewirkt, **dadurch gekennzeichnet, daß** die Hubakturatoreinrichtung (16) den dieser zugeordneten Elektromotor (160) aufweist, wobei der Elektromotor (160) wenigstens die Hubaktion der Hubaktuatoreinrichtung (16) bewirkt und der Elektromotor (160) direkt an der Hubaktuatoreinrichtung (16) angeordnet ist.

2. Ladebordwandsystem nach Anspruch 1, **dadurch gekennzeichnet, daß** die Klappaktuatoreinrichtung (17) einen dieser zugeordneten Elektromotor (170) aufweist, wobei der Elektromotor (170) die Klappaktion der Klappaktuatoreinrichtung (17) bewirkt.

3. Ladebordwandsystem nach einem oder beiden der Ansprüche 1 oder 2, **dadurch gekennzeichnet, daß** der Elektromotor (160; 170) integral mit der Hub- und/oder Klappaktuatoreinrichtung (16; 17) ausgebildet ist).

4. Ladebordwandsystem nach einem oder mehreren der Ansprüche 1 bis 3, **dadurch gekennzeichnet, daß** die Hubund/oder Klappaktuatoreinrichtung (16, 17) in Form einer hydraulisch betriebenen Kolbenzylindereinrichtung ausgebildet ist.

5. Ladebordwandsystem nach einem oder mehreren der Ansprüche 1 bis 4, **dadurch gekennzeichnet, daß** der Elektromotor (160; 170) der Hub- und/oder Klappaktuatoreinrichtung (16, 17) zur Ausführung von deren Hub- und/oder Klappbewegung zentral steuerbar und/oder regelbar ist.

## Claims

1. Tail-gate lift system (10) for attachment to vehicles (11), in particular heavy goods vehicles, comprising in each case an essentially parallelogram-shaped lifting and/or folding load-bearing structure (12) consisting of two essentially parallel load-bearing structures (13, 14) spaced a distance apart, an essentially platform-shaped tail-gate lift (15) for raising and lowering a load and optionally to close a stowage space of the vehicle (12) and a lifting actuator device (16) to raise and lower the tail-gate lift, optionally together with a folding actuator device (17) to pivot the tail-gate lift (15) from the horizontal to the vertical and vice versa, whereby there is provided an electric motor (160) that brings about the lifting action of the tail-gate lift (15), **characterized in that** the lifting actuator device (16) has the electric motor (160) assigned to the latter, whereby the electric motor (160) brings about at least the lifting action of the lifting actuator device (16) and the electric motor (160) is arranged directly on the lifting actuator device (16).

2. Tail-gate lift system according to Claim 1, **characterized in that** the folding actuator device (17) has an electric motor (170) assigned to it, whereby the electric motor (170) brings about the folding action of the folding actuator device (17).

3. Tail-gate lift system according to one or both of the Claims 1 or 2, **characterized in that** the electric motor (160; 170) is an integral part of the lifting and/or folding actuator device (16; 17).

4. Tail-gate lift system according to one or more of the Claims 1 to 3, **characterized in that** the lifting and/or folding actuator device (16; 17) is designed in the form of a hydraulically-operated piston/cylinder device.

5. Tail-gate lift system according to one or more of the Claims 1 to 4, **characterized in that** the electric motor (160; 170) of the lifting and/or folding actuator device (16; 17) can be controlled and/or regulated centrally to perform its lifting and/or folding movement.

## Revendications

1. Système de hayon élévateur (10) à fixer contre des véhicules (11), en particulier des camions, comprenant un cadre de levage et de pivotement (12) sensiblement en forme de parallélogramme, formé par deux consoles de support (13, 14) écartées l'une de l'autre et sensiblement parallèles, un hayon élévateur (15) sensiblement en forme de plateau, destiné à monter et abaisser une charge et, le cas échéant, à fermer un compartiment de chargement du véhicule (11), et un dispositif à actuateur de levage (16) destiné à monter et abaisser le hayon élévateur (15), ainsi que, le cas échéant, un dispositif à actuateur de pivotement (17), destiné à faire pivoter le hayon élévateur (15) d'un plan horizontal vers un plan vertical et inversement, un moteur électrique (160) étant prévu pour activer l'action de levage du hayon élévateur (15), **caractérisé en ce que** le dispositif à actuateur de levage (16) comporte le moteur électrique (160) qui lui est associé, le moteur électrique (160) activant au moins l'action de levage du dispositif à actuateur de levage (16) et le moteur électrique (160) étant agencé directement au niveau du dispositif à actuateur de levage (16).

2. Système de hayon élévateur selon la revendication 1, **caractérisé en ce que** le dispositif à actuateur de pivotement (17) comporte un moteur électrique (170) qui lui est associé, le moteur électrique (170) activant l'action de pivotement du dispositif à actuateur de pivotement (17).

3. Système de hayon élévateur selon une ou les deux revendications 1 ou 2, **caractérisé en ce que** le moteur électrique (160 ; 170) est réalisé intégralement avec le dispositif à actuateur de levage et/ou le dispositif à actuateur de pivotement (16 ; 17).

4. Système de hayon élévateur selon une ou plusieurs des revendications 1 à 3, **caractérisé en ce que** le dispositif à actuateur de levage et/ou le dispositif à actuateur de pivotement (16 ; 17) est réalisé sous forme d'une unité à piston et vérin actionnée par voie hydraulique.

5. Système de hayon élévateur selon une ou plusieurs des revendications 1 à 4, **caractérisé en ce que** le moteur électrique (160 ; 170) du dispositif à actuateur de levage et/ou du dispositif à actuateur de pivotement (16 ; 17) peut être commandé et/ou réglé de manière centralisée pour l'exécution du mouvement de levage ou de pivotement dudit dispositif.
